# EUROPEAN PATENT SPECIFICATION

(11) **EP 2 316 640 B1**
(45) Date of publication and mention of the grant of the patent: **19.08.2015**
(21) Application number: 10003838.9
(22) Date of filing: 10.04.2010
(51) Int. Cl.: B32B 5/04

(54) **Resilient protective wrap**
Elastische Schutzhülle
Enveloppe protectrice souple

(30) Priority: 29.10.2009 TW 098219984
(43) Date of publication of application: 04.05.2011
(73) Proprietor: Hou, I-Yung, Yanshuei Township T'ai nan County (TW)
(72) Inventor: Hou, I-Yung, Yanshuei Township T'ai nan County (TW)
(74) Representative: Becker, Thomas

(56) References cited:
- WO-A1-2004/076154

## Description

This invention relates to a resilient protective wrap, more particularly to a resilient protective wrap to wrap and support a body part of an individual. -

Resilient protective wraps, such as wrist bands, hand braces, waist bands, ankle supports, etc., may be used to wrap a body part of an individual during therapy, body exercise, sports, and other activities in order to support bones, and especially to protect joints. A typical resilient protective wrap is made from a multi-layered textile material that includes two stretchable fabric layers sandwiching a layer of rubber, such as neoprene or chloroprene rubber. Such rubber materials are highly elastic to provide stretchability, exhibit a good restoring force to provide sufficient compression fit to the body part of the user, and possess high tensile strength to impart high durability. However, there are disadvantages in that the rubber materials can pollute the environment and can cause discomfort to the user due to their poor heat-dissipating and air-circulating ability.

Water-based polyurethane is solvent-free and environmentally friendly. Open cell foams made from an aqueous dispersion of polyurethane are breathable and have been used commonly in the manufacture of synthetic leather and other textile products which do not require high elasticity and a good restoring force. Currently, open cell foams made from an aqueous polyurethane dispersion are usually used as a coating having a small thickness that is less than 1mm.

WO2004/076154A1 discloses a method of continuous in-line lamination of a foamed layer upon a moving carrier substrate, forming a laminate comprising a solidified foamed layer adjacent to the carrier substrate.

Therefore, the object of the present invention is to provide a resilient protective wrap that is environmentally friendly and that has good heat-dissipating and air-circulating properties.

In this respect the invention proposes a resilient protective wrap according to claim 1. Embodiments of this wrap are disclosed in the sub-claims and will become apparent in the following detailed description of the preferred embodiment of the invention, with reference to the accompanying drawings, in which:
Fig. 1 is a perspective view showing a resilient protective wrap according to the present invention embodied as a knee brace;
Fig. 2 is a sectional view taken along line 2-2 of Fig. 1; and
Fig. 3 is a perspective view showing another resilient protective wrap according to the present invention embodied as a wrist brace.

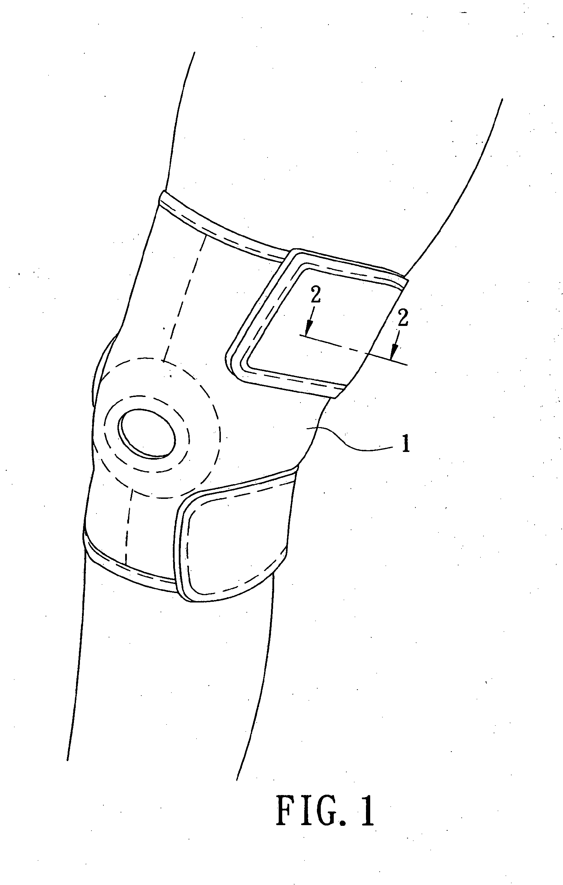

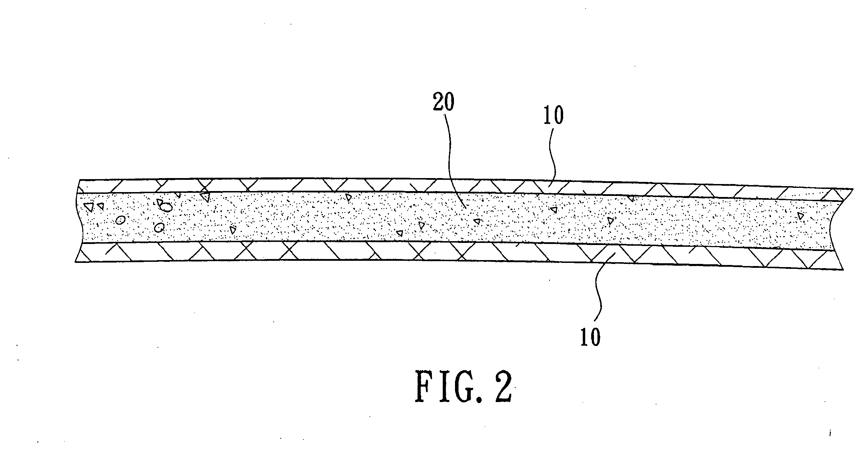

Referring to Figs. 1 and 2, there is shown a resilient protective wrap according to the present invention that is embodied as a knee brace 1. The knee brace 1 includes a multi-layeted textile structure that includes top and bottom fabric layers 10, and an open cell polyurethane foam 20 laminated between the fabric layers 10.

The top and bottom fabric layers 10 are made from a stretchable fabric material, such as a woven or knitted fabric. The fabric layers 10 have a unidirectional stretch fabric that is stretchable along a longitudinal direction of the knee brace 1. As an alternative they may have a bidirectional stretch fabric that is stretchable in either a longitudinal or transverse direction.

The open cell polyurethane foam 20 is made from a material including an aqueous dispersion of water-based polyurethane (PU). The aqueous polyurethane dispersion used is prepared from a polyol component and a crosslinking agent. The polyol component includes a polyether polyol or a polyester polyol. The crosslinking agent includes an amine resin. As an alternative it may include an isocyanate compound. Any polyol and crosslinking agent suitable for forming an aqueous polyurethane dispersion may be used in the present invention.

In addition to the aqueous polyurethane dispersion, the material of the open cell polyurethane foam 20 may further include other ingredients, such as a foaming agent, a foam stabilizer, a thickener, a pigment, a filler or extender, ect. The foaming agent, foam stabilizer, thickener, pigment, and filler may be compounds that are used conventionally in preparing a foam-forming polyurethane composition. Examples of the fillers or extenders used in the present invention include wood flour, calciumcarbonate, mica, etc. Preferable, the fillers or extenders are nano particle materials.

The water-based polyurethane foam 20 is made in a conventional manner. The ingredients of the material are mixed and foamed using a foaming mixer. The resulting foamed material is laminated with the fabric layers 10 through a conventional lamination method. The foamed material is spread onto a surface of one of the fabric layers 10 that is advanced by a conveyor, and heated for removal of water from the foamed material while being advanced on the conveyor. As the water is removed gradually, the foamed material becomes a semisolid, and another fabric layer 10 is placed on the surface of the foamed material. Continued heating of the foamed material causes the material to become hardened completely. After the foamed material is cooled, it is adhered to both of the fabric layers 10 without using any adhesive.

The thickness of the foamed material spread onto the fabric layer 10 may be controlled using a doctor blade. The polyurethane foam 20 has a thickness of 2-5mm.

The degree of foaming or the density of the polyurethane foam 20 may be adjusted by controlling the foaming mixer or the duration time for foaming the material. Generally, when the density of the polyurethane foam 20 is decreased, the elongation thereof increases but the tensile strength and the modulus of elasticity thereof will decrease. When the density of the polyurethane foam 20 is increased, the tensile strength and the modulus of elasticity increase, but the elongation will decrease.

In order to enable the resilient protective wrap to provide good tightness and sufficient compression to the user when the resilient protective wrap is worn by the user, the polyurethane foam 20 is provided with a modulus of elasticity ranging from 2 to 7 kgf/cm². If the modulus of elasticity of the polyurethane foam 20 is lower than 2 kgf/cm², the resilient protective wrap will be too slack to provide good tightness and sufficient wrapping pressure to the user. If the modulus of elasticity is higher than 7 kgf/cm², the resilient protective wrap will be too tight and will cause discomfort to the user.

The largest elongation of the polyurethane foam 20 preferably ranges from 200% to 450%. If the largest elongation is lower than 200%, the polyurethane foam 20 cannot have sufficient stretchability so that the resilient protective wrap will be overly tight. If the largest elongation is higher than 450%, the stretchability of the polyurethane foam 20 will be overly high so that the resilient protective wrap cannot provide sufficient tightness and therefore insufficiently supports the particular joint of the user around which the resilient protective wrap is provided.

In order to provide the polyurethane foam 20 with sufficient robustness, the tensile strength thereof is at least 4 kgf/cm², and more preferably at least 6 kgf/cm².

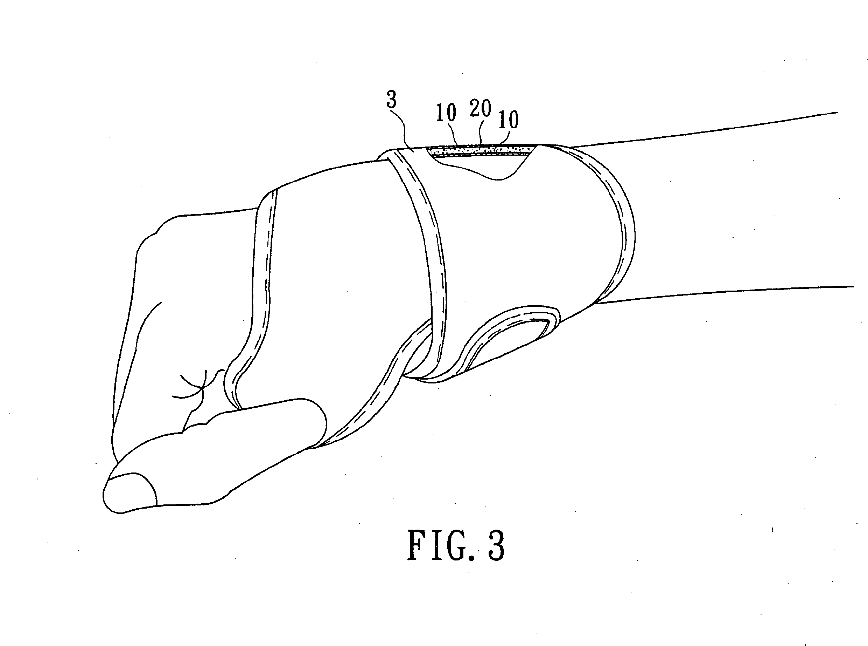

Referring to Fig. 3, there is shown another resilient protective wrap according to the present invention that is embodied as a wrist brace. The wrist brace 3 also has a multi-layered textile structure including the fabric layers 10 and the polyurethane foam 20.

Specific examples of the open cell resilient foam 20 will be further illustrated below. It should be understood that the Examples are for illustrative purposes only and are not to be construed as limiting the scope of the present invention in any manner whatsoever.

### Examples

### Preparation of the Material for the Open Cell Resilient Foam Formulation 1

100 parts by wt of polyether polyol (40 parts of Impranil LP RSC 1380 and 60 parts of Impranil DLU from Bayer, particle size 200-300nm, solid content 60%) was mixed with the following ingredients:
2-8 parts by wt of a crosslinking agent (TDI, Desmodur N3900 from Bayer) based on a total solid content of the polyol;
2-6 parts by wt of a foaming agent (succinamate, Stockal SR from Bozzetto Group) based on a total solid content of the polyol;
2-8 parts by wt of a foam stabilizer (Stockal STA from Bozzetto Group) based on a total solid content of the polyol;
1-5 parts by wt of a thickener (Borchi Gel ALA from OMG Borchers GmbH) based on a total solid content of the polyol;
3-6 parts by wt of a white pigment based on a total solid content of the polyol; and
1-4 parts by wt of a filler or extender.

### Formulation 2

100 parts by wt of polyester type polyol (70 parts of Impranil LP RSC 1554 and 30 parts of Impranil LP RSC 1537 from Bayer, particle size 200-300nm, solid content 60%) was mixed with the following ingredients:
2-8 parts by wt of a crosslinking agent (TDI Desmodur N3900 fromBayer) based on a total solid content of the polyol;
5-10 parts by wt of a foaming agent (Dicrylan FLN from Huntsman) based on a total solid content of the polyol;
1-5 parts by wt of a thickener (Mirox Am from Bozzetto Group) based on a total solid content of the polyol;
3-6 parts by wt of a white pigment based on a total solid content of the polyol; and
1-4 parts by wt of a filler or extender.

### Examples 1-12

Examples 1-12 were prepared using formulation (1) and using different fillers listed in Tables 1-3. The mica used in Example 1 and Examples 5-12 had a particle size of 5-20nm.

### Fabrication of the polyurethane foam

The ingredients of each of Examples 1-12 were mixed and foamed in a mixer. The resulting foamed mixture of each example was spread on a release substrate to form a foam layer and was heated gradually to a temperature of about 140°C in order to completely remove water from the foamed mixture. The thickness of the foam layer spread on the release substrate was controlled by using a doctor blade.

Samples of Examples 1-12 were subjected to tests for tensile strength, elongation, and modulus of elasticity according to standard method CNS-3553. The properties of the samples are shown in Tables 1 to 3.

**TABLE 1**

| Example | Filler | Thickness (mm) | Density (g/l) | Tensile Strength (Kgf/cm²) | Largest Elongation (%) | Modulus of Elasticity (at 200%) (Kgf/cm²) |
|---|---|---|---|---|---|---|
| 1 | Mica 1% | 3.0 | 230 | 8.184 | 297.628 | 5.22 |
| 2 | CaCO₃ 1% | 3.0 | 230 | 7.478 | 318.878 | 4.36 |
| 3 | Wood flour 1% | 3.0 | 230 | 6.721 | 262.502 | 5.15 |
| 4 | No filler | 3.0 | 230 | 7.923 | 311.503 | 4.91 |

**TABLE 2**

| Example | Filler | Thickness (mm) | Density (g/l) | Tensile Strength ((Kgf/cm²) | Largest Elongation (%) | Modulus of Elasticity (at 200%) (Kgf/cm²) |
|---|---|---|---|---|---|---|
| 5 | Mica 1% | 2.3 | 159 | 4.648 | 431.477 | 2.14 |
| 6 | Mica 1% | 2.3 | 306 | 7.289 | 366.047 | 3.51 |
| 7 | Mica 1% | 2.3 | 459 | 10.08 | 339.798 | 5.00 |
| 8 | Mica 1% | 2.3 | 609 | 10.932 | 269.625 | 6.376 |

**TABLE 3**

| Example | Filler | Thickness (mm) | Density (g/l) | Tensile Strength ((Kgf/cm²) | Largest Elongation (%) | Modulus of Elasticity (at 200%) (Kgf/cm²) |
|---|---|---|---|---|---|---|
| 9 | Mica 2% | 2.3 | 240 | 5.147 | 345.755 | 2.69 |
| 10 | Mica 3% | 2.3 | 238 | 4.784 | 342.003 | 2.80 |
| 11 | Mica 5% | 2.3 | 236 | 4.421 | 333.294 | 2.69 |
| 12 | Mica 7% | 2.3 | 236 | 4.189 | 313.211 | 3.03 |

The results of Table 1 show that the tensile strength and the modulus of elasticity of Example 1 is higher than that of Examples 2-4. It was observed that Example 1 provides good tightness and compression without causing discomfort to the user.

The results of Table 2 show that, when the density of the polyurethane foam is increased, the tensile strength and the modulus of elasticity increase, and the elongation decreases.

The results of Table 3 show that the amount of mica used in the polyurethane foam can affect the properties of the polyurethane foam.

In sum, the resilient protective wrap according to the present invention, which is made including the open cell polyurethane foam, provides good heat dissipation and air circulation effects as compared to the conventional wrist brace or ankle support which is made from non-breathable rubber. Additionally, as the material used in making the polyurethane foam is solvent-free, it is environmentally friendly.

## Claims

1. A resilient protective wrap usable to wrap a body part of an individual for protection against injury, **characterized by**:
at least one resilient fabric layer (10) that is stretchable at least in one direction; and
an open cell water-based polyurethane foam (20) laminated on the resilient fabric layer (10) and made from a material including an aqueous dispersion of polyurethane;
wherein the polyurethane foam (20) has a thickness of **2-5mm,** a largest elongation ranging from 200%-450%, a modulus of elasticity ranging from 2 to 7 kgf/cm², a tensile strength of at least 4 kgf/cm², and a density ranging from 180-600g/l.

2. The resilient protective wrap of Claim 1, **characterized in that** the largest elongation ranges from 250-350%.

3. The resilient protective wrap of Claim 1, **characterized in that** the tensile strength is at least 6 kgf/cm².

4. The resilient protective wrap of Claim 1, **characterized in that** the modulus of elasticity ranges from 3-6 kgf/cm².

5. The resilient protective wrap of Claim 1, **characterized in that** the density ranges from 200-450 g/l.

6. The resilient protective wrap of Claim 1, **characterized in that** the material of the polyurethane foam (20) further includes a foaming agent, a crosslinking agent, and a filler.

7. The resilient protective wrap of Claim 6, **characterized in that** the filler includes mica particles.

8. The resilient protective wrap of Claim 6, **characterized in that** the filler includes nano particles.

9. The resilient protective wrap of Claim 1, **characterized in that** the resilient fabric layer (10) is a unidirectional stretch fabric that is stretchable in a longitudinal direction of the resilient protective wrap.

10. The resilient protective wrap of Claim 1, **characterized in that** the resilient fabric layer (10) is a bidirectional stretch fabric that is stretchable in longitudinal and transverse directions of the resilient protective wrap.

## Patentansprüche

1. Elastische, schützende Bandage, die benutzt werden kann um ein Körperteil eines Individuums zum Schutz vor Verletzungen einzuwickeln, **gekennzeichnet durch**:
mindestens eine elastische Stoffschicht (10), die in mindestens eine Richtung dehnbar ist; und
einen offenporigen, auf Wasser basierenden Polyurethanschaum (20), der auf die elastische Stoffschicht (10) laminiert und aus einem Material hergestellt ist, das eine wässrige Polyurethan-Dispersion umfasst;
wobei der Polyurethanschaum (20) eine Dicke von 2-5mm, eine größte Ausdehnung von 200% - 450%, einen Elastizitätsmodul von 2 bis 7 kgf/cm², einer Zugfestigkeit von mindestens 4 kgf/cm², und einer Dichte von 180 - 600 g/l besitzt.

2. Elastische, schützende Bandage nach Anspruch 1, **dadurch gekennzeichnet, dass** die größte Ausdehnung zwischen 250% und 350% beträgt.

3. Elastische, schützende Bandage nach Anspruch 1, **dadurch gekennzeichnet, dass** die Zugfestigkeit mindestens 6 kgf/cm² beträgt

4. Elastische, schützende Bandage nach Anspruch 1, **dadurch gekennzeichnet, dass** der Elastizitätsmodul zwischen 3 und 6 kgf/cm² beträgt.

5. Elastische, schützende Bandage nach Anspruch 1, **dadurch gekennzeichnet, dass** die Dichte zwischen 200 und 450 g/l beträgt.

6. Elastische, schützende Bandage nach Anspruch 1, **dadurch gekennzeichnet, dass** das Material des Polyurethanschaums (20) des Weiteren einen Schaumbilder, ein Vernetzungsmittel, und ein Füllmaterial enthält.

7. Elastische, schützende Bandage nach Anspruch 6, **dadurch gekennzeichnet, dass** das Füllmaterial Glimmerpartikel enthält.

8. Elastische, schützende Bandage nach Anspruch 6, **dadurch gekennzeichnet, dass** das Füllmaterial Nanopartikel enthält.

9. Elastische, schützende Bandage nach Anspruch 1, **dadurch gekennzeichnet, dass** die elastische Stoffschicht (10) ein unidirektionaler Dehnstoff ist, der in einer Längsrichtung der elastischen, schützenden Bandage dehnbar ist.

10. Elastische, schützende Bandage nach Anspruch 1, **dadurch gekennzeichnet, dass** die elastische Stoffschicht (10) ein bidirektionaler Dehnstoff ist, der in Längsrichtungen und Querrichtungen der elastischen, schützenden Bandage dehnbar ist.

## Revendications

1. Bandage protecteur utilisable pour bander une partie du corps d'une personne pour la protéger des blessures, caractérisé pat :
au moins une couche de tissu élastique (10) qui est extensible au moins dans un sens ; et
une mousse de polyuréthane à base aqueuse à cellules ouvertes (20) laminée sur la couche de tissu élastique (10) et faite d'un matériau contenant une dispersion aqueuse de polyuréthane ;
dans lequel la mousse de polyuréthane (20) a une épaisseur de 2 à 5 mm, une élongation maximale allant de 200 % à 450 %, un module d'élasticité allant de 2 à 7 kgf/cm², une résistance à la traction d'au moins 4 kgf/cm² et une densité allant de 180 à 600 g/l.

2. Bandage protecteur selon la revendication 1, **caractérisé en ce que** l'élongation maximale va de 250 à 350 %.

3. Bandage protecteur selon la revendication 1, **caractérisé en ce que** la résistance à la traction est d'au moins 6 kgf/cm².

4. Bandage protecteur selon la revendication 1, **caractérisé en ce que** le module d'élasticité va de 3 à 6 kgf/cm².

5. Bandage protecteur selon la revendication 1, **caractérisé en ce que** la densité va de 200 à 450 g/l.

6. Bandage protecteur selon la revendication 1, **caractérisé en ce que** le matériau de la mousse de polyuréthane (20) contient en outre un agent moussant, un agent de liaison croisée et une matière de charge.

7. Bandage protecteur selon la revendication 6, **caractérisé en ce que** la matière de charge contient des particules de mica.

8. Bandage protecteur selon la revendication 6, **caractérisé en ce que** la matière de charge contient des nanoparticules.

9. Bandage protecteur selon la revendication 1, **caractérisé en ce que** la couche de tissu élastique (10) est un tissu extensible unidirectionnel qui est extensible dans un sens longitudinal du bandage protecteur élastique.

10. Bandage prosecteur selon la revendication 1, **caractérisé en ce que** la couche de tissu élastique (10) est un tissu extensible bidirectionnel qui est extensible dans les sens longitudinal et transversal du bandage protecteur élastique.
